# EUROPÄISCHE PATENTSCHRIFT

(11) **EP 3 194 897 B1**
(45) Veröffentlichungstag und Bekanntmachung des Hinweises auf die Patenterteilung: **25.12.2019**
(21) Anmeldenummer: 15757214.0
(22) Anmeldetag: 26.08.2015
(51) Int. Cl.: G01D 11/24

(54) **FEUCHTIGKEITSERFASSUNG INNERHALB EINES SENSORS**
MOISTURE DETECTION WITHIN A SENSOR
DÉTECTION D'HUMIDITÉ AU SEIN D'UN CAPTEUR

(30) Priorität: 17.09.2014 DE 102014218711
(43) Veröffentlichungstag der Anmeldung: 26.07.2017
(73) Patentinhaber: Continental Teves AG & Co. OHG, 60488 Frankfurt am Main (DE)
(72) Erfinder: ENDRES, Ralf, 64521 Gross-Gerau (DE)
(86) Internationale Anmeldenummer: PCT/EP2015/069569
(87) Internationale Veröffentlichungsnummer: WO 2016/041750

(56) Entgegenhaltungen:
- US-A- 3 943 557
- US-A- 4 224 565
- US-A- 5 606 264
- US-A1- 2004 031 339
- US-A1- 2009 079 423

## Beschreibung

Die Erfindung betrifft einen Sensor zum Erfassen einer physikalischen Messgröße mit einem Geberfeld, ein Verfahren zum Überwachen des Sensors, und ein Fahrzeug mit dem Sensor und einer Steuervorrichtung.

Aus der WO 2010 / 037 810 A1 ist ein Sensor zum Ausgeben eines Sensorsignals bekannt, dass von einer physikalischen Messgröße abhängig ist, die über ein Geberfeld mit einem Messaufnehmer erfasst wird.

Druckschrift US2009/079423 A1 beschreibt einen Sensor mit einer Sensorschaltung zum Erfassen eines Geberfeldes und zum Ausgeben eines davon abhängigen Sensorsignals, wobei der Sensor eine Sensorschaltung und ein diese einhausendes Gehäuse umfasst. US 2004/031339 A1 offenbart einen Feuchtigkeitssensor, der das Eindringen von Feuchtigkeit in eine eingeschlossene Komponente überwacht. Dafür wird ein Feuchtigkeitssensor auf die elektronische Komponente aufgebracht und mit der elektronischen Komponente zusammen eingehaust.

Druckschriften US 3943557 A, US 4224565 A sowie US 5606264 A offenbaren weitere Feuchtigkeitssensoren, die zur Überwachung von eindringender Feuchtigkeit in Gehäuse von elektronischen Komponenten verwendet werden.

Es ist Aufgabe der vorliegenden Erfindung die bekannte elektronische Baugruppe zu verbessern. Die Aufgabe wird durch die Merkmale der unabhängigen Ansprüche gelöst. Bevorzugte Weiterbildungen sind Gegenstand der abhängigen Ansprüche.

Dem beanspruchten Sensor liegt die Überlegung zugrunde, dass das Gehäuse die Sensorschaltung vor eindringender Feuchtigkeit schützen sollte, da diese sonst durch die eindringende Feuchtigkeit angegriffen werden könnte. Dies hätte zur Folge, dass elektrische Leitungen auf der Sensorschaltung ungewollt kurzgeschlossen oder unterbrochen werden könnten, wodurch eine zuverlässige Funktion des Sensors nicht mehr gegeben wäre.

Dem angegebenen Sensor liegt jedoch die Erkenntnis zugrunde, dass das Gehäuse selbst Verwitterungserscheinungen und Umwelteinflüssen unterliegt und beispielsweise von der Feuchtigkeit, vor der sie die Sensorschaltung schützen soll, angegriffen wird, weil Feuchtigkeit zur Bildung eines leitfähigen Elektrolyten beitragen kann . Auf Dauer kann sie daher insbesondere beim Einsatz in äußerst feuchten Bereichen, wie beispielsweise bei Raddrehzahlsensoren am Fahrzeug, keinen ausreichenden Schutz vor eindringender Feuchtigkeit garantieren.

Hier setzt der angegebene Sensor mit dem Vorschlag an, den Sensor hinsichtlich eindringender Feuchtigkeit zu überwachen. Auf diese Weise kann die Gefahr erkannt werden, dass der Sensor fehlerhafte Signale liefert oder droht auszufallen, um entsprechende Gegenmaßnahmen, wie das Aufsuchen einer Werkstatt mit dem Fahrzeug einzuleiten.

In einer Weiterbildung des angegebenen Sensors umfasst die Sensorschaltung einen Messaufnehmer zum Wandeln des Geberfeldes in ein Gebersignal und eine Signalverarbeitungsschaltung zum Ausgeben des Sensorsignals basierend auf dem Gebersignal, wobei der Feuchtigkeitsmessaufnehmer auf einer Oberfläche des Messaufnehmers und/oder der Signalverarbeitungsschaltung angeordnet ist.

Da der Messaufnehmer und die Signalverarbeitungsschaltung ohnehin vorhanden sind, wird deren Oberfläche durch die Anordnung des Feuchtigkeitsmessaufnehmers auf ihr nutzbringend verwendet, so dass kein zusätzlicher Bauraum zur Umsetzung der Erfindung notwendig ist. Sind der Messaufnehmer und/oder die Signalverarbeitungsschaltung als integrierte Schaltungen aufgebaut, sollte der Feuchtigkeitsmessaufnehmer selbstverständlich oberhalb oder in einer Öffnung einer Passivierungsschicht angeordnet werden, damit diese nicht ungewollt die zu messende Feuchtigkeit abschirmt. Dies kann beispielsweise analog zu den Kontaktflächen, auch Bond Pads genannt erfolgen.

In einer besonderen Weiterbildung des angegebenen Sensors ist der Feuchtigkeitsmessaufnehmer ein resistiver und/oder kapazitiver Messaufnehmer mit einer ersten Elektrode und einer elektrisch von der ersten Elektrode getrennten zweiten Elektrode ist, und einen elektrischen Widerstand und/oder eine Kapazität zwischen den beiden Elektroden von der zu erfassenden Feuchtigkeit abhängig ist. Ein derartiger Feuchtigkeitsmessaufnehmer ist nicht nur kostengünstig zu fertigen, er kann auch flach, beispielsweise in der zuvor genannten Weise Oberfläche des Messaufnehmers und/oder der Signalverarbeitungsschaltung aufgebracht werden, so dass sich die technische Umsetzung der Erfindung kaum in einer Erhöhung des notwendigen Bauraumes niederschlägt.

In einer bevorzugten Weiterbildung des angegebenen Sensors sind die beiden Elektroden ineinander greifende Kammelektroden. Auf diese Weise kann zwischen den beiden Elektroden eine besonders große am elektrischen Widerstand und/oder an der Kapazität beteiligte Wirkfläche bereitgestellt werden, wodurch der Feuchtigkeitsmessaufnehmer in dem angegebenen Sensor mit einer vergleichsweise hohen Sensitivität ausgestattet wird.

In einer anderen Weiterbildung des angegebenen Sensors ist das Geberfeld von einer Drehzahl eines Rades an einem Fahrzeug abhängig und die Sensorschaltung eingerichtet, als Sensorsignal ein von der Drehzahl abhängiges Signal auszugeben. Derartige Raddrehzahlsensoren können insbesondere in Fahrzeugen besonders hohen Feuchtigkeiten während des Betriebes ausgesetzt sein, wodurch ein erhöhtes Ausfallrisiko durch eindringende Feuchtigkeit zwischen das Gehäuse und die Sensorschaltung gegeben ist. Im Rahmen der Erfindung jedoch wird das Sicherheitsrisiko durch die eintretende Feuchtigkeit gesenkt, weil diese vor eventuellen sicherheitskritischen Auswirkungen erkannt werden kann, um eventuell Gegenmaßnahmen einzuleiten.

In einer noch anderen Weiterbildung ist das Gehäuse eine die Sensorschaltung einhüllende Schutzmasse, insbesondere eine Kunststoffschutzmasse.

Gemäß einem weiteren Aspekt der Erfindung umfasst ein Verfahren zum Überwachen eines der angegebenen Sensoren die Schritte Erfassen des Überwachungssignals und Ausgeben eines Fehlers, wenn das Überwachungssignal vorbestimmte Bedingung erfüllt, die von einem vorbestimmten Feuchtegrad zwischen der Sensorschaltung und dem Gehäuse abhängig ist.

Die Überwachung kann dabei zu beliebigen Zeitpunkten erfolgen. Eine Möglichkeit wäre, die Überwachung zu Entwicklungszwecken einzusetzen, um beispielsweise die feuchtigkeitsabdichtende Wirkung neuer Gehäuse zu untersuchen. Mit dem angegebenen Verfahren muss nun nicht mehr abgewartet werden, bis sich die eindringende Feuchtigkeit auf den Sensor auswirkt und diesen in seiner Funktion beeinträchtigt, sondern sie kann bereits vorher erfasst werden, wodurch Testzeiten reduziert und Entwicklungstätigkeiten beschleunigt werden können.

Alternativ kann der Sensor in einem Fahrzeug verbaut sein und das Fahrzeug basierend auf dem ausgegebenen Fehler in einen Fehlerbetriebsmodus überführt werden. Das Fahrzeug kann beispielsweise aus einem Normalbetriebsmodus, in dem alle Funktionen uneingeschränkt zu Verfügung stehen in einen Fehlerbetriebsmodus überführt werden, in dem bestimmte sicherheitsrelevante Funktionen nur noch eingeschränkt oder gar nicht mehr zur Verfügung stehen. Eine wichtige Einschränkung wäre dabei beispielsweise, für das Fahrzeug nur noch eine Maximalgeschwindigkeit zuzulassen, die weit unterhalb der Maximalgeschwindigkeit im Normalbetriebsmodus liegt. Gleichzeitig kann mit der Ausgabe des Fehlers auch ein Hinweis angezeigt werden, eine Werkstatt aufzusuchen, um den als fehlerhaft identifizierten Sensor auszutauschen.

Gemäß einem weiteren Aspekt ist eine Steuervorrichtung eingerichtet, eines der angegebenen Verfahren auszuführen.

In einer Weiterbildung der angegebenen Steuervorrichtung weist die angegebene Vorrichtung einen Speicher und einen Prozessor auf. Dabei ist das angegebene Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein Fahrzeug ein auf wenigstens einem Rad getragenen Chassis, ein mit dem Rad verbundenes Geberelement, das eingerichtet ist ein sich mit dem Rad drehendes Geberfeld abzugeben, einen der angegebenen Sensoren zum Ausgeben eines Sensorsignals basierend auf dem Geberfeld und eine der angegebenen Steuervorrichtungen zum Ausgeben des Überwachungssignals basierend auf zwischen die Sensorschaltung und das Gehäuse eingedrungener Feuchtigkeit.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine schematische Ansicht eines Fahrzeuges mit einer Fahrdynamikregelung,
Fig. 2 eine schematische Ansicht eines Drehzahlsensors in dem Fahrzeug der Fig. 1,
Fig. 3a eine schematische Ansicht des Drehzahlsensors der Fig. 2 in einer ersten Herstellungsstufe,
Fig. 3b eine schematische Ansicht des Drehzahlsensors der Fig. 2 in einer zweiten Herstellungsstufe,
Fig. 3c eine schematische Ansicht des Drehzahlsensors der Fig. 2 in einer dritten Herstellungsstufe,
Fig. 4 eine schematische Ansicht eines Feuchtigkeitsmessaufnehmers für den Drehzahlsensor der Fig. 2 und 3, und
Fig. 5 eine schematische Ansicht einer Auswerteschaltung zur Auswertung eines Überwachungssignals aus dem Feuchtigkeitssensor der Fig. 4 zeigen.

In den Figuren werden gleiche technische Elemente mit gleichen Bezugszeichen versehen und nur einmal beschrieben.

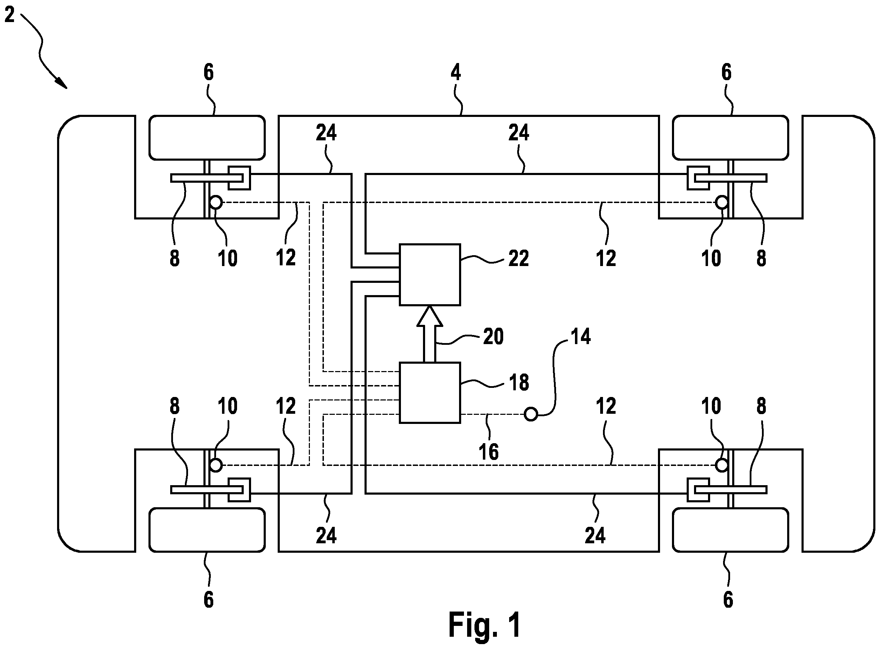

Es wird auf Fig. 1 Bezug genommen, die eine schematische Ansicht eines Fahrzeuges 2 mit einer an sich bekannten Fahrdynamikregelung zeigt. Details zu dieser Fahrdynamikregelung können beispielsweise der DE 10 2011 080 789 A1 entnommen werden.

Das Fahrzeug 2 umfasst ein Chassis 4 und vier Räder 6. Jedes Rad 6 kann über eine ortsfest am Chassis 4 befestigte Bremse 8 gegenüber dem Chassis 4 verlangsamt werden, um eine Bewegung des Fahrzeuges 2 auf einer nicht weiter dargestellten Straße zu verlangsamen.

Dabei kann es in einer dem Fachmann bekannten Weise passieren, dass das die Räder 6 des Fahrzeugs 2 ihre Bodenhaftung verlieren und sich das Fahrzeug 2 sogar von einer beispielsweise über ein nicht weiter gezeigtes Lenkrad vorgegebenen Trajektorie durch Untersteuern oder Übersteuern wegbewegt. Dies wird durch an sich bekannte Regelkreise wie ABS (Antiblockiersystem) und ESP (elektronisches Stabilitätsprogramm) vermieden.

In der vorliegenden Ausführung weist das Fahrzeug 2 dafür Drehzahlsensoren 10 an den Rädern 6 auf, die eine Drehzahl 12 der Räder 6 erfassen. Ferner weist das Fahrzeug 2 einen Inertialsensor 14 auf, der Fahrdynamidaten 16 des Fahrzeuges 2 erfasst aus denen beispielsweise eine Nickrate, eine Wankrate, eine Gierrate, eine Querbeschleunigung, eine Längsbeschleunigung und/oder eine Vertikalbeschleunigung in einer dem Fachmann an sich bekannten Weise ausgegeben werden kann.

Basierend auf den erfassten Drehzahlen 12 und Fahrdynamikdaten 16 kann ein Regler 18 in einer dem Fachmann bekannten Weise bestimmen, ob das Fahrzeug 2 auf der Fahrbahn rutscht oder sogar von der oben genannten vorgegebenen Trajektorie abweicht und entsprechen mit einem an sich bekannten Reglerausgangssignal 20 darauf reagieren. Das Reglerausgangssignal 20 kann dann von einer Stelleinrichtung 22 verwendet werden, um mittels Stellsignalen 24 Stellglieder, wie die Bremsen 8 anzusteuern, die auf das Rutschen und die Abweichung von der vorgegebenen Trajektorie in an sich bekannter Weise reagieren.

Anhand des in Fig. 1 gezeigten Drehzahlsensors 10 soll die vorliegende Erfindung näher verdeutlicht werden, auch wenn die vorliegende Erfindung an beliebigen elektronischen Vorrichtungen und insbesondere an beliebigen Sensoren, wie Magnetfeldsensoren, Beschleunigungssensoren, Drehratensensoren, Körperschallsensoren oder Temperatursensoren umsetzbar ist.

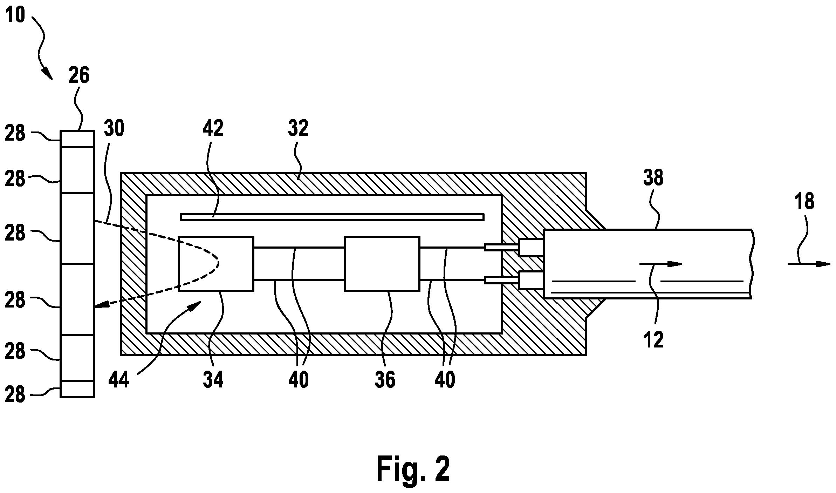

Es wird auf Fig. 2 Bezug genommen, die eine schematische Ansicht des Drehzahlsensors 10 in dem Fahrzeug 2 der Fig. 1 zeigt.

Der Drehzahlsensor 10 ist in der vorliegenden Ausführung als aktiver Drehzahlsensor 10 ausgeführt, im Rahmen dessen ein von einer drehfest mit einem der Räder 6 verbundenen Encoderscheibe 26, die aus einer Vielzahl von Magnetpolen 28 zusammengesetzt ist, ein Magnetfeld 30 abgegeben wird. Das Magnetfeld 30 durchdringt einen in einem Gehäuse 32 eingehausten Messaufnehmer 34, der über eine Signalaufbereitsschaltung 36 an ein Datenkabel 38 angeschlossen ist, über das die Drehzahl 12 an den Regler 18 übertragen werden kann. Dabei können der Messaufnehmer 34, die Signalaufbereitungsschaltung 36 und das Datenkabel 38 über Verdrahtungen 40, beispielsweise in Form eines Leadframes miteinander verdrahtet sein. Um die elektromagnetische Verträglichkeit des Drehzahlsensors 10 zu erhöhen, kann ein Abschirmblech 42 angeordnet sein.

Weitere Hintergrundinformationen zu aktiven Drehzahlsensoren können beispielsweise der DE 101 46 949 A1 entnommen werden.

Im Einsatz in dem zuvor genannten Fahrzeug 2 ist es für eine hohe Langlebigkeit des Drehzahlsensors 10 besonders wichtig, möglichst dicht gegen eindringende Feuchtigkeit zu sein. Gerade weil der Drehzahlsensor 10 am Rad 6 verbaut ist, das während der Fahrt des Fahrzeuges 2 eine nicht unerhebliche Menge an Schmutz und Feuchtigkeit aufschleudern kann, kommt der Abdichtung gegenüber eindringender Feuchtigkeit eine sehr hohe Bedeutung zu, die vermeidet, dass beispielsweise die Verdrahtung 40 korrodiert und zu einer unterbrochen wird.

Um dies zu erreichen, wird die, den Messaufnehmer 34 und die Signalauswerteschaltung 36 umfassende Sensorschaltung 44 des Drehzahlsensors 10 in der nachstehenden Weise mit einer das Gehäuse 32 bildenden Schutzmasse ummantelt.

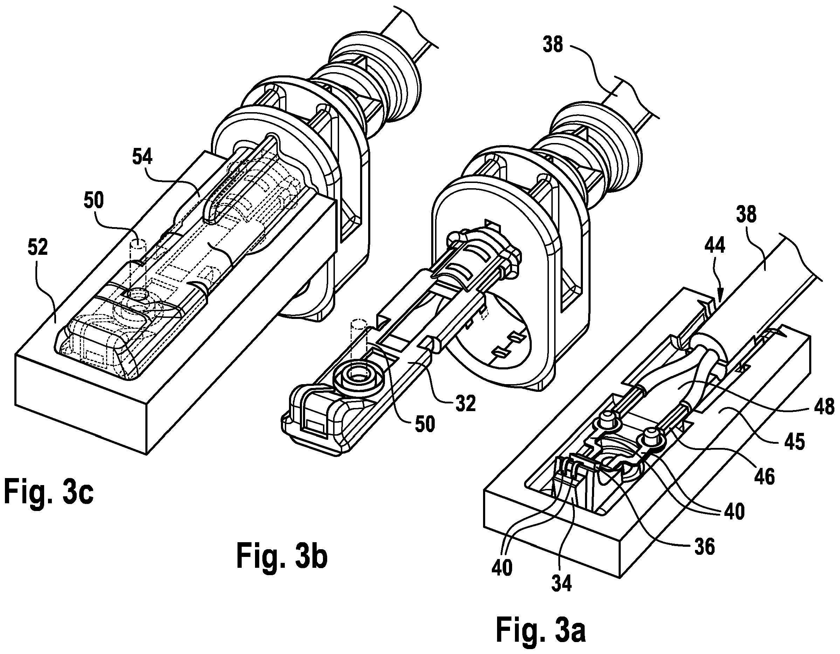

In Fig. 3a ist die elektronische Baugruppe 44 ohne das Gehäuse 32 in ein Werkzeug 45 zum Urformen des Gehäuses 32 eingesetzt dargestellt. Dabei ist die Verdrahtung 40 als der oben genannte Leadframe ausgebildet, auf dem der Messaufnehmer 34 und die Signalauswerteschaltung 36 mechanisch gehalten und elektrisch verdrahtet sind. Um die Erfassung des Magnetfeldes 30 zu unterstützen, ist der Messaufnehmer 34 abgebogen.

An der Verdahtung 40 in Form des Leadframes befindet sich eine elektrische Schnittstelle 46, an die das Datenkabel 38 beispielsweise durch Splicen angeschlossen ist.

Das Urformwerkzeug 45 wird um weitere Teile ergänzt, die gemeinsam einen Urformraum 47 bilden, der in Fig. 3a geöffnet und deshalb nur teilweise dargestellt ist. In diesen Urformraum 48 wird dann die das Gehäuse 32 bildende Schutzmasse eingeführt. Als Schutzmasse kann dabei ein beliebiges Kunststoffmaterial verwendet werden, wobei der Urformprozess sich nach dem verwendeten Kunststoffmaterial richtet. Wird als Kunststoffmaterial beispielsweise ein Thermoplast verwendet, kann der Urformprozess ein Spritzgussprozess sein.

Die mit dem Gehäuse 32 ummantelte Sensorschaltung 44 kann dann an einem Haltestift 50 gehalten in ein weiteres Werkzeug 52 eingesetzt und in einer weiteren Schutzmasse 54, einem sogenannten Overmold eingehaust werden.

Die schützende Wirkung des Gehäuses 32 und der weiteren Schutzmasse 54 vor eindringender Feuchtigkeit kann jedoch aufgrund Abnutzungs- und anderen Alterungserscheinungen über die Zeit nachlassen, so dass nicht dauerhaft sichergestellt werden kann, dass keine Feuchtigkeit zwischen das Gehäuse 32 und die Sensorschaltung 44 eindringt.

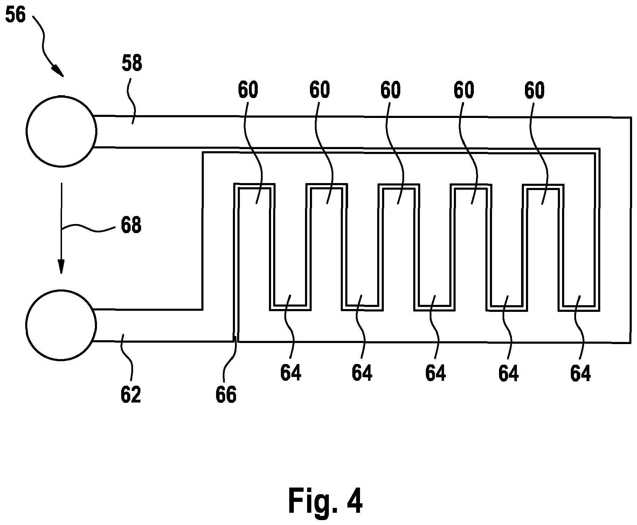

Hier greift die vorliegende Ausführung mit dem Vorschlag an, zwischen der Sensorschaltung 44 und dem Gehäuse 32 einen beispielsweise in Fig. 4 gezeigten Feuchtigkeitsmessaufnehmer 56 anzuordnen, der zwischen die Sensorschaltung 44 und das Gehäuse 32 eindringende Feuchtigkeit erfasst. Der Feuchtigkeitsmessaufnehmer 56 kann prinzipiell beliebig aufgebaut und beliebig in dem Sensor 10 angeordnet werden, solange er derart angeordnet ist, dass die zuvor erwähnte Feuchtigkeit erfasst wird.

Vorzugsweise sollte der Feuchtigkeitsmessaufnehmer 56 jedoch auf der Oberfläche des Messaufnehmers 34 und/oder der Oberflache der Signalverarbeitungsschaltung 36 angeordnet werden, um den Platzbedarf möglichst gering zu halten. Alternativ könnten zur Anordnung des Feuchtigkeitsmessaufnehmers 56 aber auch bestehende Strukturen genutzt werden, die beispielsweise zu Testzwecken oder aus anderen Gründen während der Produktion auf der Oberfläche der Sensorschaltung 44 platziert worden sind, und die funktional während des Normalbetriebs des Sensors 10 nicht verwendet werden.

Der Feuchtigkeitsmessaufnehmer 56 kann aus einer ersten Kammelektrode 58 mit einer Vielzahl von Fingerleitungen 60 und einer zweiten Kammelelektrode 62 ebenfalls mit einer Vielzahl von Fingerleitungen 64 ausgeführt sein. Dabei greifen die Fingerleitungen 60 der ersten Kammelektrode 58 in die Fingerleitungen 64 der zweiten Kammelektrode 62, wodurch ein entsprechend langgezogener Luftspalt 66 zwischen den beiden Kammelektroden 58, 62 erreicht wird.

Alternativ oder zusätzlich kann die sich die beiden Kammelektroden 58, 62 auch umschlingen, wodurch beispielsweise ein spiralförmiger Luftspalt 66 entsteht, der ebenfalls langgezogen ausgeführt ist.

Tritt in den Luftspalt 66 Feuchtigkeit ein, so bewirkt diese eine Änderung der Kapazität und des elektrischen Widerstandes zwischen den beiden Kammelektroden 58, 62. Entweder kann der elektrische Widerstand über eine an die Kammelektroden 58, 62 angelegte Spannung 68 erfasst und in nachstehender Weise ausgewertet werden. Alternativ oder zusätzlich könnte jedoch auch die Kapazität als Grundlage zur Auswertung herangezogen werden.

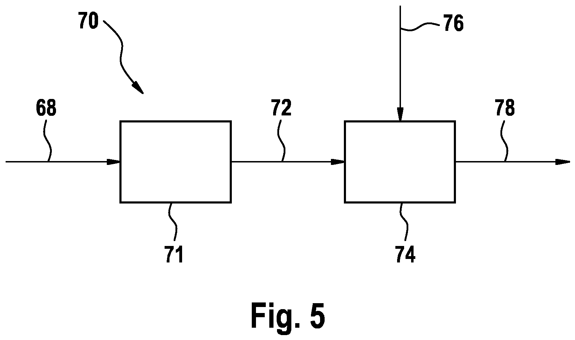

Hierzu wird auf Fig. 5 Bezug genommen, die schematisch eine Auswertevorrichtung 70 für die an den Feuchtigkeitsmessaufnehmer 56 angelegte, vom elektrischen Widerstand zwischen den Kammelektroden 58, 62 und damit von der Feuchtigkeit abhängige Spannung 68 zeigt. Die Spannung 68 stellt damit ein Überwachungssignal dar, mit der sich die Feuchtigkeit zwischen der Sensorschaltung 44 und dem Gehäuse 32 überwachen lässt.

Die Spannung 68 wird zunächst mit einer Spannungsmesseinrichtung 70 erfasst. Die erfasst Spannung 72 kann dann in einer Vergleichseinrichtung 74 einer vorbestimmten Bedingung 76 gegenübergestellt werden, die von einem vorbestimmten Feuchtegrad abhängig sein sollte, der zwischen der der Sensorschaltung 44 und dem Gehäuse 32 maximal auftreten darf. Da die Feuchtigkeit den elektrischen Widerstand und die Kapazität zwischen den beiden Kammelektroden 58, 62 senkt, kann die vorbestimmte Bedingung 76 beispielsweise als Minimalspannung ausgeführt sein, unter die die Spannung 68 nicht fallen darf.

Fällt die Spannung 68 und damit die erfasste Spannung 72 unter die vorbestimmten Bedingung 76 in Form der Minimalspannung kann die Vergleichseinrichtung 74 einen Fehler 78 ausgeben, der auf eine zu hohe Feuchtigkeit zwischen der Sensorschaltung 44 und dem Gehäuse 32 hinweist. Auf diesen Fehler hin kann im Fahrzeug 2 beliebig reagiert werden. Eine Möglichkeit wäre, das Fahrzeug 2 in einen Fehlerbetriebsmodus zu überführen, in dem beispielsweise die Höchstgeschwindigkeit des Fahrzeuges auf ein vorbestimmtes Maximum reduziert wird.

## Patentansprüche

1. Sensor (10) zum Erfassen einer physikalischen Messgröße mit einem Geberfeld (30), umfassend:
- eine Sensorschaltung (44) zum Erfassen des Geberfeldes (30) und zum Ausgeben einer von der physikalischen Messgröße abhängigen Sensorsignals (12),
- ein die Sensorschaltung (44) einhausendes Gehäuse (32), und
- einen Feuchtigkeitsmessaufnehmer (56) zwischen der Sensorschaltung (44) und dem Gehäuse (32), der eingerichtet ist, ein Überwachungssignal (68) zu erzeugen, das von zwischen die Sensorschaltung (44) und dem Gehäuse (32) eindringender Feuchtigkeit abhängig ist, wobei
die Sensorschaltung (44) einen Messaufnehmer (34) zum Wandeln des Geberfeldes (30) in ein Gebersignal und eine Signalverarbeitungsschaltung (36) zum Ausgeben des Sensorsignals (12) basierend auf dem Gebersignal umfasst, und wobei der Feuchtigkeitsmessaufnehmer (56) auf einer Oberfläche des Messaufnehmers (34) und/oder der Signalverarbeitungsschaltung (36) angeordnet ist.

2. Sensor (10) nach Anspruch 1, wobei der Feuchtigkeitsmessaufnehmer (56) ein resistiver Messaufnehmer mit einer ersten Elektrode (58) und einer elektrisch von der ersten Elektrode (58) getrennten zweiten Elektrode (62) ist, und einen elektrischen Widerstand zwischen den beiden Elektroden (58, 62) von der zu erfassenden Feuchtigkeit abhängig ist.

3. Sensor (10) nach Anspruch 2, wobei die beiden Elektroden (58, 62) ineinander greifende Kammelektroden sind.

4. Sensor (10) nach einem der vorstehenden Ansprüche, wobei das Geberfeld (30) von einer Drehzahl eines Rades (6) an einem Fahrzeug (2) abhängig und die Sensorschaltung (44) eingerichtet ist, als Sensorsignal (12) ein von der Drehzahl abhängiges Signal auszugeben.

5. Sensor (10) nach einem der vorstehenden Ansprüche, wobei das Gehäuse (32) eine die Sensorschaltung (44) einhüllende Schutzmasse ist.

6. Verfahren zum Überwachen eines Sensors (10) nach einem der vorstehenden Ansprüche, umfassend:
- Erfassen des Überwachungssignals (68),
- Ausgeben eines Fehlers (78), wenn das Überwachungssignal (78) vorbestimmte Bedingung (76) erfüllt, die von einem vorbestimmten Feuchtegrad zwischen der Sensorschaltung (44) und dem Gehäuse (32) abhängig ist.

7. Verfahren nach Anspruch 6, wobei der Sensor (10) in einem Fahrzeug (2) verbaut ist und das Fahrzeug (2) basierend auf dem ausgegebenen Fehler (78) in einen Fehlerbetriebsmodus überführt wird.

8. Fahrzeug (2) umfassend ein auf wenigstens einem Rad (6) getragenen Chassis (4), ein mit dem Rad (6) verbundenes Geberelement (26), das eingerichtet ist ein sich mit dem Rad (6) drehendes Geberfeld (30) abzugeben, einen Sensor (10) nach einem der Ansprüche 1 bis 5 zum Ausgeben des Sensorsignals (12) basierend auf dem Geberfeld (26) und eine Steuervorrichtung (70) zum Ausgeben des Überwachungssignals (68) basierend auf zwischen die Sensorschaltung (44) und das Gehäuse (32) eingedrungener Feuchtigkeit.

## Claims

1. Sensor (10) for detecting a physical measurement variable using a transmitter field (30), comprising:
- a sensor circuit (44) for detecting the transmitter field (30) and for outputting a sensor signal (12) that is dependent on the physical measurement variable,
- a housing (32) that houses the sensor circuit (44), and
- a moisture measurement pickup (56) between the sensor circuit (44) and the housing (32), which moisture measurement pickup is configured to generate a monitoring signal (68), which is dependent on moisture ingressing between the sensor circuit (44) and the housing (32), wherein
the sensor circuit (44) comprises a measurement pickup (34) for converting the transmitter field (30) to a transmitter signal and a signal processing circuit (36) for outputting the sensor signal (12) based on the transmitter signal, and wherein the moisture measurement pickup (56) is arranged on a surface of the measurement pickup (34) and/or the signal processing circuit (36).

2. Sensor (10) according to Claim 1, wherein the moisture measurement pickup (56) is a resistive measurement pickup having a first electrode (58) and a second electrode (62) electrically isolated from the first electrode (58), and an electrical resistor between the two electrodes (58, 62) is dependent on the moisture that is to be detected.

3. Sensor (10) according to Claim 2, wherein the two electrodes (58, 62) are comb electrodes that engage into one another.

4. Sensor (10) according to one of the preceding claims, wherein the transmitter field (30) is dependent on a rotational speed of a wheel (6) on a vehicle (2) and the sensor circuit (44) is configured to output a signal that is dependent on the rotational speed as the sensor signal (12).

5. Sensor (10) according to one of the preceding claims, wherein the housing (32) is a protective compound that envelops the sensor circuit (44).

6. Method for monitoring a sensor (10) according to one of the preceding claims, comprising:
- detecting the monitoring signal (68),
- outputting a fault (78) when the monitoring signal (68) satisfies a predetermined condition (76), which is dependent on a predetermined degree of moisture between the sensor circuit (44) and the housing (32).

7. Method according to Claim 6, wherein the sensor (10) is installed in a vehicle (2) and the vehicle (2) is transferred to a fault operating mode based on the fault (78) that is output.

8. Vehicle (2) comprising a chassis (4) that is supported on at least one wheel (6), a transmitter element (26) that is connected to the wheel (6), said transmitter element being configured to output a transmitter field (30) that rotates together with the wheel (6), a sensor (10) according to one of Claims 1 to 5 for outputting the sensor signal (12) based on the transmitter field (26) and a control apparatus (70) for outputting the monitoring signal (68) based on moisture that has ingressed between the sensor circuit (44) and the housing (32).

## Revendications

1. Capteur (10) destiné à acquérir une grandeur de mesure physique avec un diagramme de transmetteur (30), comprenant :
- un circuit de capteur (44) destiné à acquérir le diagramme de transmetteur (30) et à délivrer un signal de capteur (12) dépendant de la grandeur de mesure physique,
- un boîtier (32) dans lequel est logé le circuit de capteur (44) et
- un enregistreur de mesure d'humidité (56) entre le circuit de capteur (44) et le boîtier (32), lequel est conçu pour générer un signal de surveillance (68) qui est dépendant de l'humidité qui pénètre entre le circuit de capteur (44) et le boîtier (32),
le circuit de capteur (44) comportant un enregistreur de mesure (34) destiné à convertir le diagramme de transmetteur (30) en un signal de transmetteur et un circuit de traitement de signal (36) destiné à délivrer le signal de capteur (12) en se basant sur le signal de transmetteur, et l'enregistreur de mesure d'humidité (56) étant disposé sur une surface de l'enregistreur de mesure (34) et/ou du circuit de traitement de signal (36).

2. Capteur (10) selon la revendication 1, l'enregistreur de mesure d'humidité (56) étant un enregistreur de mesure résistif ayant une première électrode (58) et une deuxième électrode (62) isolée électriquement de la première électrode (58), et une résistance électrique entre les deux électrodes (58, 62) étant dépendante de l'humidité à acquérir.

3. Capteur (10) selon la revendication 2, les deux électrodes (58, 62) étant des électrodes en peigne qui s'engrène l'une dans l'autre.

4. Capteur (10) selon l'une des revendications précédentes, le diagramme de transmetteur (30) étant dépendant d'une vitesse de rotation d'une roue (6) sur un véhicule (2) et le circuit de capteur (44) étant conçu pour délivrer, en tant que signal de capteur (12), un signal dépendant de la vitesse de rotation.

5. Capteur (10) selon l'une des revendications précédentes, le boîtier (32) étant une masse de protection qui enveloppe le circuit de capteur (44).

6. Procédé de surveillance d'un capteur (10) selon l'une des revendications précédentes, comprenant :
- l'acquisition du signal de surveillance (68),
- la délivrance d'un défaut (78) lorsque le signal de surveillance (68) remplit une condition prédéterminée (76), laquelle est dépendante d'un degré d'humidité prédéterminé entre le circuit de capteur (44) et le boîtier (32).

7. Procédé selon la revendication 6, le capteur (10) étant installé dans un véhicule (2) et le véhicule (2) étant transféré dans un mode de fonctionnement avec défaut en se basant sur le défaut (78) délivré.

8. Véhicule (2), comprenant un châssis (4) porté sur au moins une roue (6), un élément transmetteur (26) relié à la roue (6), lequel est conçu pour délivrer un diagramme de transmetteur (30) qui tourne avec la roue (6), un capteur (10) selon l'une des revendications 1 à 5 destiné à délivrer le signal de capteur (12) en se basant sur le diagramme de transmetteur (26) et un arrangement de commande (70) destiné à délivrer le signal de surveillance (68) en se basant sur l'humidité ayant pénétré entre le circuit de capteur (44) et le boîtier (32) .
